# EUROPEAN PATENT APPLICATION

(11) **EP 4 494 459 A1**
(43) Date of publication of application: **22.01.2025**
(21) Application number: 24189321.3
(22) Date of filing: 18.07.2024
(51) Int. Cl.: A01G 27/04, A01G 27/06, A01G 9/033

(54) **PLANTER ARRANGEMENT**

(30) Priority: 18.07.2023 HU 2300250
(71) Applicant: Frustum Kft., 7633 Pécs Hungary (HU)
(72) Inventor: Nágel, Péter Sebestyén, 1068 Budapest (HU)
(74) Representative: Horváth, Bertalan

(57) **Abstract**

The invention concerns a plant holder arrangement particularly for creating a green roof, the arrangement comprising
- a container (10) having a base (12) and side walls (13) protruding from the base (12),
- a water storage space (18) for storing water and a planting medium receiving space (19) adapted for receiving a planting medium (40), arranged in the container (10), and
- a water-wicking fabric (30) providing water transmission between the water storage space (18) and the planting medium receiving space (19), wherein
- the container (10) further comprises at least two inside edges (14) formed in opposite side walls (13),
- the arrangement further comprises a separator member (20) arranged to abut on the inside edge (14) to separate the water storage space (18) from the planting medium receiving space (19), said separator member (20) having water pass-through openings (24), and
- the water-wicking fabric (30) is arranged such that it is seated on the separator member (20) in the planting medium receiving space (19), and it is folded under the separator member (20) along the inside edge (14).

## Description

### TECHNICAL FIELD

The invention relates to a plant holder arrangement for creating e.g. green surfaces, in particular green roofs.

### BACKGROUND ART

Nowadays - especially in cities - there is ever-increasing demand for more greenery areas. In an urban environment, one way of creating greenery areas is to "green" the hitherto unused areas of buildings, i.e., to plant vegetation in these areas. Plants can be individually planted for example in pots or balcony boxes on balconies and terraces, but in some cases the design of newly built buildings includes plant coverage of certain building surfaces, e.g. the roof or walls, so for example green roofs are created on horizontal roofs of buildings.

Due to global climate change, there is an increasing emphasis on water-retention capability in urban areas. Appropriate urban water retention may for example prevent flooding and flash floods, or their scale and environmental impact may be reduced. In line with this, the so-called "sponge city" concept emphasises applying urban parks, ponds, or other solutions with good water-retention capability to make it possible to retain, and potentially clean and use naturally occurring waters.

There are various flower boxes and plant holder arrangements known in the prior art for the above-described purposes.

US 2017/0142918 A1 discloses a hydro planter comprising an inner container for a substrate, and also comprises an absorption medium, for example geotextile, and an outer container. Water is transported from the outer container to the inner container with the help of the absorption material. The planter according to the document is suited for receiving plants, and for storing water in the hollow legs of the box (e.g. for collecting rainwater), for supply water to the plants, and for creating green roofs. The flower box can be transported easily, it is made of a recyclable material (e.g. polypropylene), and can also be utilised for improving thermal insulation. The inner container has one or more grids that enable liquid to enter from the inner container to the outer container (this is how rainwater can be collected in the legs of the outer container); however, the grids are arranged higher than the lowest point of the substrate, so the bottom portion of the substrate that is located lower than the plane of the grids may even be saturated with water for a prolonged period of time, which may result in the damage of the plants in the container.

WO 2012/050529 A1 discloses a planting tray for making green roofs that has a reservoir for retaining water. A mesh root guard (e.g. a perforated plastic plate) is arranged above the reservoir and is supported on a ledge along the edges of the tray and separates the water reservoir from a planting medium. The reservoir is divided into cells, and a long continuous strip of geotextile is placed in the tray. The geotextile is folded (pushed down into each slit) such that at given locations it extends into a given cell for wicking water therefrom and supplying it to the plants. Outlets functioning as overflow outlets are also defined in the tray, being located in the sides thereof. A disadvantage of this approach is that, in case the strip of geotextile is not folded correctly, i.e., in case it does not extend deep enough, it may not reach the water level in the given cell; the geotextile may inadvertently be drawn out from certain cells even during planting, resulting in insufficient water supply at the given area.

US 2018/0187429 A1 discloses multifunctional trays, i.e., trays applicable for creating green roofs and for providing roof insulation. The material of the tray can be for example polypropylene or polystyrene. The tray comprises a lower portion suited for storing water and for collecting rainwater and an upper portion for receiving a planting medium, and it is also provided with a hole functioning as an overflow outlet. The document does not disclose a solution for re-moistening the planting medium with water taken from the containers.

US 2007/0094927 A1 discloses a vegetation pod that is also suited for creating a green roof. The tray is adapted to absorbing and storing water and for growing plants in a growing medium. The growing medium rests atop a layer of filter fabric (e.g. geotextile); and an additional layer of absorbent material (e.g. mineral wool, polyurethane foam, etc.) may be provided between the filter fabric and the tray for retaining water. The tray can be moved easily without using machine power; a green roof can be created by interconnecting multiple trays. The material of the tray is a plastic containing polypropylene or polyethylene. The planting tray according to the document does not have a water tank, so it is able to absorb only a small amount of liquid, i.e., only the absorbed water can be used for supplying water to the plants.

US 7,392,616 B1 discloses a modular planting system comprising two nested trays. The lower tray member is for storing water, while the upper tray member is adapted to retain a growth medium, wherein a material capable of supplying water (e.g. wicking material) is arranged between the tray members, and the wicking material provides continuous moisture supply to the growth medium from the lower reservoir. The trays can be applied for creating a continuous-cover green roof in a simple manner, without contribution from a skilled person. By filling designated trays with gravel instead of growth medium additional rainwater collectors can be created, in which case the wicking material must be led between adjacent trays, which makes it more difficult to move the trays after installation as this could lead to damaging (cutting) the wicking material. The trays may also have overflow outlets.

An approach for creating green roofs is also disclosed in CN 110158874 A. A box according to the document comprises a water tank, a grid, a filter layer, and planting medium. The box further comprises a water level regulator that can be applied for controlling the degree of opening of an outlet with reference numeral 11, i.e., the amount of water that can be drained through said outlet, thereby preventing the rotting of the roots of the plants in the planting medium. The document does not disclose how water can be supplied to the plants from the water tank.

### DESCRIPTION OF THE INVENTION

In light of the known approaches there is a need for a plant holder arrangement that can be installed simply and easily and is suitable for storing water, for example rainwater, and for keeping the planting medium placed therein moist while preventing an excessive accumulation of water.

The object of the technical solution according to the invention is to provide a plant holder arrangement that eliminates the drawbacks of prior art solutions to the greatest possible extent.

The primary object of the invention is to provide a plant holder arrangement that is also suitable for creating green roofs.

Another object of the invention is to provide a plant holder arrangement that can also be made of an insulation material, and thereby can be applied as an additional insulation layer, e.g., roof insulation.

A further object of the invention is to provide a complete solution for water management, including in particular a steady and uniform water supply to the planting medium, and a safe draining of excess water.

The objects according to the invention have been achieved by providing the plant holder arrangement according to claim 1. Preferred embodiments of the invention are defined in the dependent claims.

The technical solution according to the invention has the advantage that it does not require irrigation or providing an irrigation system, because the water storage tank formed in the container is able to store even a significant amount of precipitation. The collected water provides a steady supply of moisture to the planting medium also during periods with no precipitation, which is indispensable for growing healthy and uniform vegetation. Another advantage of storing water is that the invention contributes to decreasing the load on the sewage system by entirely or partially capturing rainfall such that the captured rainwater does not pose a load on the sewage system. Thereby, the invention assists in flash flood protection in inhabited, built-up areas. Furthermore, the water stored in the plant holder according to the invention also contributes to humidifying the micro-environment, which is beneficial not only for the plants but also to nearby humans. Thanks to its above-described advantageous features, the invention is also in line with the concept of "sponge cities" as it contributes to improving water management in its area of application.

It has been recognised that a water-wicking fabric placed between the planting medium and the water tank is not only able to convey water from the water container to the planting medium but can also filter the water conveyed from the planting medium to the water tank, for example in the case of rainfall or watering from the top. Thanks to that, larger particles of the planting medium that would settle and accumulate in the water tank - and thus could block it or reduce its usable volume - cannot enter the tank.

Another advantage of the invention is that a water drainage unit may contribute to providing support to the separator member adapted for separating the planting medium receiving space from the water tank, thereby ensuring the stability of the entire arrangement, and also providing that the planting medium has a uniform thickness.

A further advantage of the solution according to the invention is that the container applied therein has a robust configuration allowing that the container can be partially or completely made of an insulation material; the plant holder arrangement may thereby contribute - depending on the location of application - to the insulation, thermal insulation of the roof, terrace, balcony, etc., not only by means of the applied vegetation and planting medium but also by the container itself. Insulation materials, for example extruded polystyrene (EPS) are relatively soft materials, and, in addition to providing insulation, they also protect the surfaces where they are placed.

Certain preferred embodiments of the technical solution according to the invention are configured to be stackable on each other, so the containers or the entire plant holder arrangement can be transported easily, with a small footprint.

### BRIEF DESCRIPTION OF THE DRAWINGS

Preferred embodiments of the invention are described below by way of example with reference to the following drawings, where
Fig. 1 is an exploded view of a preferred embodiment of the plant holder arrangement according to the invention,
Fig. 2 is an exploded view of the plant holder arrangement according to Fig. 1 also showing the non-visible edges (in dashed lines),
Fig. 3A is a top plan view of a container of a preferred embodiment of the plant holder arrangement according to the invention,
Fig. 3B is a section taken along the plane B-B of a preferred configuration of the container shown in Fig. 3A,
Fig. 3C is a section of the container of Fig. 3A taken along the plane A-A,
Fig. 4 is a sectional view of a preferred embodiment of the plant holder arrangement according to the invention,
Fig. 5A is a perspective view of a container of a preferred embodiment of the plant holder arrangement according to the invention,
Fig. 5B is a front view of a preferred configuration of the container according to Fig. 5A, and
Fig. 5C is a side view of the container according to Fig. 5A.

### MODES FOR CARRYING OUT THE INVENTION

The plant holder arrangement, especially for creating a green roof or other greenery area, comprises a container 10. The container 10 comprises a base 12 and side walls 13 configured to protrude from the base 12. The base 12 preferably has a shape with which a plane can be covered with no overlaps and no gaps, i.e., the base 12 has for example a rectangular, square, triangular, or even a regular hexagonal shape.

The plant holder arrangement according to the invention further comprises a water storage space 18 arranged in the container 10 for receiving water, and a planting medium receiving space 19 for receiving planting medium 40, and a water-wicking fabric 30 for providing water transmission between the water storage space 18 and the planting medium receiving space 19. The water-wicking fabric 30 is preferably an absorbent material that is able to store, absorb, and transport water. The water-wicking fabric 30 also functions as a filter fabric, i.e., it allows water to pass through, but does not let through larger debris, e.g., soil pieces. The water-wicking fabric 30 is preferably a geotextile, more preferably a geotextile comprising a polypropylene or polystyrene material. The geotextile preferably has a felt-like configuration, and it is thus particularly suited for application as a filter.

The container 10 of the plant holder arrangement according to the invention further comprises at least two inside edges 14 formed in opposite side walls 13, and the arrangement also comprises a separator member 20 arranged to abut on the inside edge 14 for separating the water storage space 18 from the planting medium receiving space 19. The separator member 20 has water pass-through openings 24 through which excess water from the planting medium 40 can enter the water storage space 18. The separator member 20 preferably comprises a plurality of water pass-through openings 24 providing approximately even drainage of fluid from the planting medium 40 into the water storage space 18.

Preferably, each side wall 13 of the container 10 comprises a respective inside edge 14 which collectively form a circumferential edge extending circumferentially along the bottom portion of the planting medium receiving space 19. In order for the inside edges 14 to provide as good a support to the separator member 20 as possible, the inside edges 14 are located in a single plane, preferably in a horizontal plane.

The water-wicking fabric 30 is arranged in the plant holder arrangement according to the invention such that it is seated on the separator member 20 in the planting medium receiving space 19, and is folded under the separator member 20 along the inside edge 14. This arrangement of the water-wicking fabric 30 provides uniform moisturising to the planting medium 40, while folding it under the edge provides on the one hand that the water-wicking fabric 30 has a fixed position in the arrangement, and on the other hand that the water-wicking fabric 30 reaches the water storage space 18 and thus it is able to convey its contents to the planting medium 40. Further, the water-wicking fabric 30 is preferably arranged such that at least a portion of the water-wicking fabric 30 is laid on the base 12 in the water storage space 18, and thus the water-wicking fabric 30 is able to convey water to the planting medium 40 irrespective of the fill level of the water storage space 18.

The container 10 of the plant holder arrangement according to the invention preferably comprises a water drainage unit 15 configured to protrude from the base 12, with a drain outlet 16 being formed therein. The water drainage unit 15 provides that liquid cannot accumulate in the plant holder arrangement according to the invention in such a way that its level is higher than the highest point of the drain outlet 16, and thus plant damage due to excess water can be prevented. An upper plane of the water drainage unit 15 is preferably in line with the inside edge 14, so the separator member 20 is seated not only on the inside edges 14 but also on the water drainage unit 15, providing additional support to the separator member 20 and preventing the separator member 20 from buckling or sagging under the weight of the vegetation planted in the plant holder. The water drainage element 15 is preferably arranged at a middle portion of the base 12, so the separator member 20 receives additional support at a location of its maximum expected load. The separator member 20 is thus able to maintain its preferred near-horizontal position, which provides that a uniform thickness of the planting medium 40 is maintained.

To prevent the blocking of the drain outlet 16 of the water drainage unit 15, i.e., to prevent the separator member 20 from blocking the outlet, the water drainage unit 15 comprises a groove 17 formed in an upper surface thereof. The uppermost portion of the drain outlet 16 is preferably located at the bottom portion of the groove 17, so excess liquid can flow through the groove 17 into the drain outlet 16 and is able to leave the container 10 therethrough.

The base 12 and/or the side walls 13 of the container 10 of the plant holder arrangement according to the invention are made of an insulation material. The insulation material is preferably extruded polystyrene (EPS), but of course other, expediently weatherproof thermal insulation materials with favourable thermal insulation properties can also be utilised. EPS has the advantage that it can be easily moulded to shape, so the container 10 according to the invention can be produced simply. Another advantage of EPS is that it is impermeable to water, and thus the liquid stored in the water storage space 18 cannot leave the water storage space 18 through the material of the container 10, for example in contrast to conventional unglazed fired ceramic plant pots. The density of the applied EPS is preferably 20-40 g/m³.

The container 10 of the plant holder arrangement according to the invention preferably comprises a leg 11 defining a water drainage space under the base 12 of the container 10 through which liquid drained from the container 10 through the drain outlet 16 may flow away, i.e., the liquid does not accumulate under the container 10; such accumulated liquid may lead to freezing damage of the container 10 and also of the place of installation, for example, a roof, e.g. in winter. Preferably, a water drainage channel may also be arranged inside the water drainage space, which channel is preferably in connection with the drain outlet 16 of the container 10.

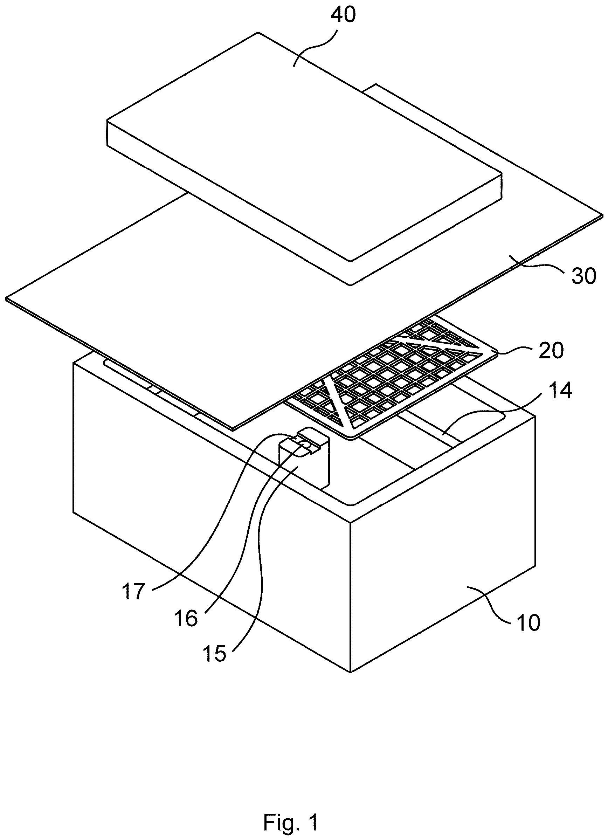

Preferred embodiments of the invention are described with reference to Figs. 1-6.

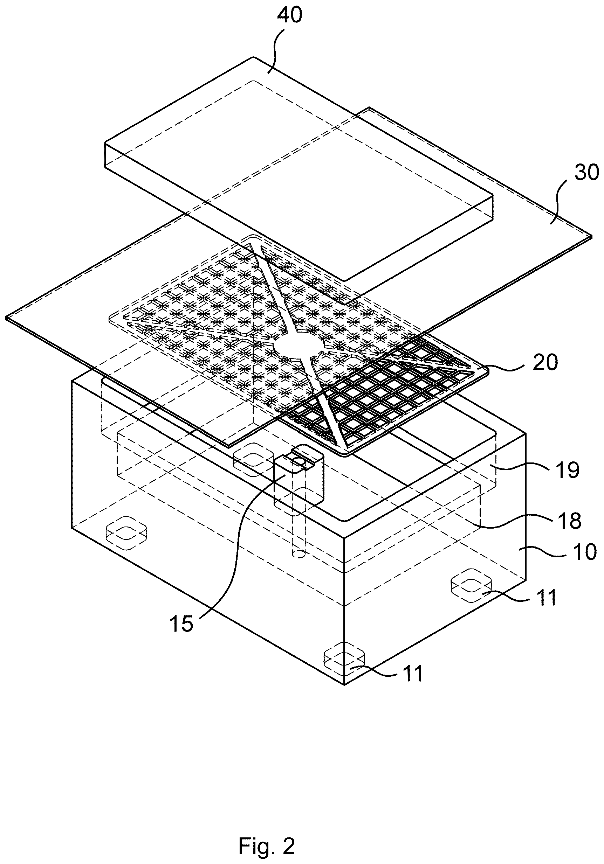

Figs. 1 and 2 illustrate in exploded view a preferred embodiment of the plant holder arrangement according to the invention; in Fig. 2 the non-visible edges are shown in dashed lines. As set forth above, the plant holder arrangement comprises four main components: a container 10, a separator member 20, a water-wicking fabric 30, and a planting medium 40.

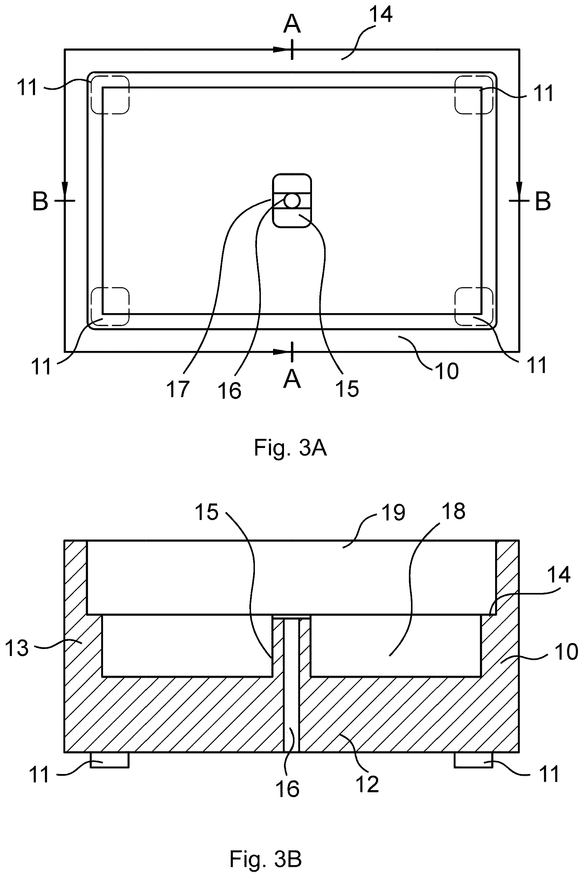

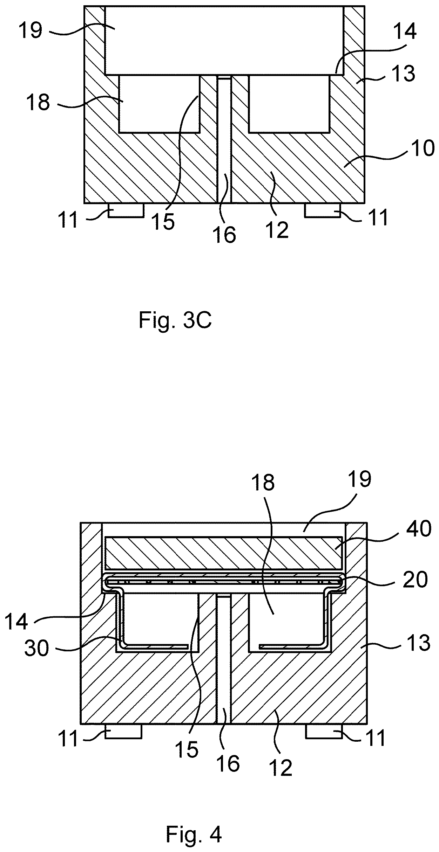

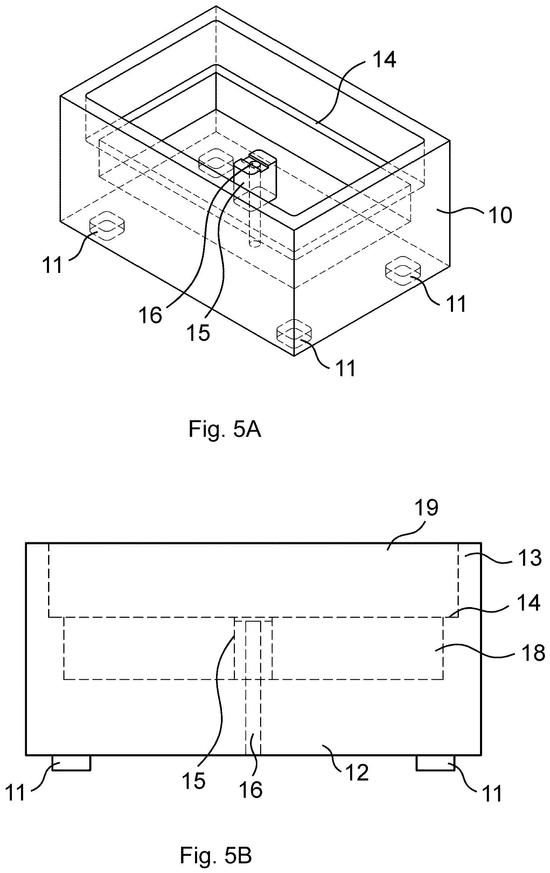

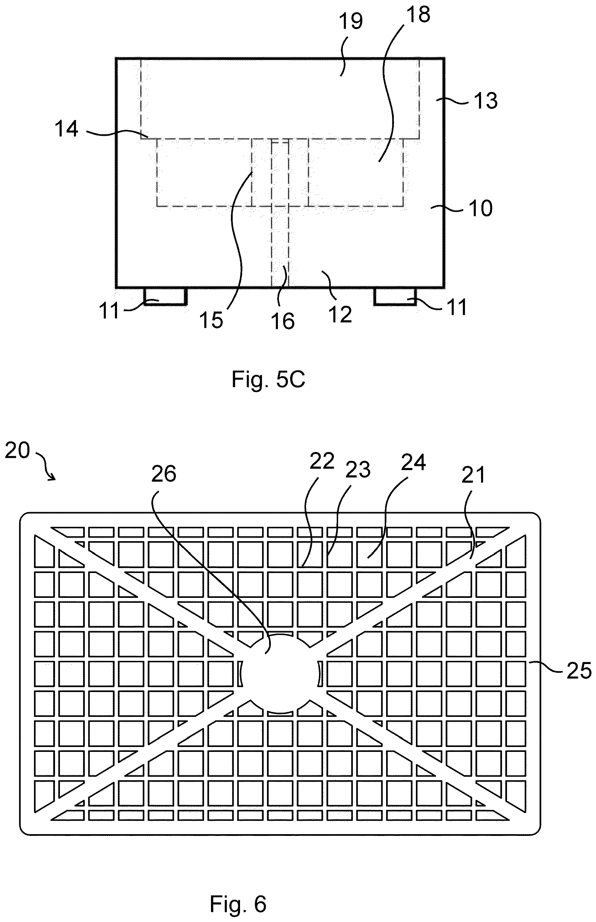

The container 10 is adapted to receive both water and a planting medium 40, preferably in mutually separated spatial regions. The relative arrangement of the mutually separated water storage space 18 and planting medium receiving space 19 can also be observed for example in Figs. 3B, 3C and 4. Further preferred features of the container 10 are described in more detail with reference to Figs. 3A-3C and to Figs. 5A-5C. Separation of the water storage space 18 from the planting medium receiving space 19 is provided by the separator member 20 that is seated on an inside edge 14 arranged in an inside portion of the container 10. In a manner set forth above, at least two oppositely-located side walls 13 of the container 10 comprise respective inside edges 14 on which the separator member 20 is seated, however, to provide even more secure support, as shown in Figs. 1 and 2 the container 10 comprises a circumferential inside edge 14 extending circumferentially along the inner side walls 13 such that the separator member 20 may be circumferentially seated on it. Further preferred features and embodiments of the separator member 20 are described in more detail in relation to Fig. 6.

In the preferred embodiment according to Figs. 1 and 2 the container 10 comprises a water drainage unit 15 which preferably protrudes from the base 12 at a middle portion of the base 12 of the container 10. The upper plane of the water drainage unit 15 preferably lies in line with the inside edge 14, so the separator member 20 is also seated on the water drainage unit 15. A drain outlet 16 is formed in the water drainage unit 15 which, in the case illustrated in Figs. 1-2, has an opening in the groove 17 formed in the upper plane of the water drainage unit 15. As discussed above, this is significant because the separator member 20 that is also seated on the water drainage unit 15 cannot to block the drain outlet 16, so excess liquid can be freely drained from the plant holder arrangement through the drain outlet 16, which for example prevents the rotting of plant roots.

As can be seen in Figs. 1-2, the size of the water-wicking fabric 30 significantly exceeds the size of the separator member 20. The reasons for that are that the water-wicking fabric 30 must be seated on the separator member 20 along its entire surface, and that the water-wicking fabric 30 must be folded under the separator member 20 along the inside edges 14, or at least along two oppositely located inside edges 14, such that the water-wicking fabric 30 can reach the level of the liquid in the water storage space 18 and can effectively convey the liquid to the planting medium 40.

The planting medium 40 is preferably a soil mixture that satisfies the needs of the plants to be planted in the plant holder arrangement, for example in regards of pH value, water retention capacity, etc. The thickness of the planting medium 40 is preferably determined by the height of the inside edge 14 and the height of the side walls 13.

Fig. 2 also gives examples for the possible positions of the legs 11 of the container 10. The spatial region formed between the legs 11 has the features that have been describe above, so they are not reiterated here. Preferred features of positioning the legs 11 will also be described in more detail below in relation to Fig. 3A.

Figs. 1-2 also illustrate the steps of the assembly process of the plant holder arrangement according to the invention. Preferably, the separator member 20 and the water-wicking fabric 30 should be placed in the container 10 simultaneously, preferably such that the water-wicking fabric 30 is seated on the separator member 20 in a wrinkle-free manner, and that the water-wicking fabric 30 "overhangs" the edges of the separator member 20 to a uniform extent along at least two opposite sides of the separator member 20 where the water-wicking fabric 30 will be folded under the separator member 20. These "overhanging" portions of the water-wicking fabric 30 will extend into the water storage space 18 such that they can convey the liquid located in the water storage space 18 to other portions of the water-wicking fabric 30, preferably the portions seated on the separator member 20, and that they can come into contact with the planting medium 40. The planting medium receiving space 19 of the container 10 may be filled with the planting medium 40 after the insertion of the separator member 20 and the water-wicking fabric 30. Preferably, plants appropriate to the type of the planting medium 40 can be planted in the planting medium 40, also taking into account the thickness of the planting medium 40. For example, for making a green roof it is preferred to plant in the planting medium 40 sun-loving plants that can well tolerate sunlight and can withstand extreme weather. Still more preferably, plants should be planted in the planting medium 40 of a green roof that do not require regular care.

As can be seen in Figs. 1-2, the container 10 has a quadrangular configuration, and not only has a rectangular base 12, but the outside surfaces of the side walls 13 thereof are also vertical, which makes it possible to arrange multiple containers 10 beside each other without gaps, thereby forming a continuous green surface. The containers 10 arranged adjacent each other can be preferably attached to each other, for example by adhesive, but they can also be interconnected by other means with releasable or permanent connections known from the prior art. This interconnection ensures that the individual containers 10 are not displaced relative to each other, preventing potential accidents caused by displaced containers 10.

Figs. 3A-3C and Figs. 5A-5C show preferred embodiments of the container 10 of the plant holder arrangement according to the invention in various views.

Fig. 3A shows the container 10 in a top plan view, wherein for example there can be seen a preferred position and configuration of the water drainage unit 15, a preferred arrangement and position of the legs 11, and preferred features of the inside edge 14.

As it has been set forth above in relation to Figs. 1 and 2, the water drainage unit 15 is preferably located in a middle portion of the base 12. Preferably, the drain outlet 16 of the water drainage unit 15 is a vertically oriented channel or bore that is located at a central portion of the water drainage unit 15; more preferably the drain outlet 16 is located near a centre point of the base 12, allowing excess water to easily flow into the drain outlet 16 from anywhere inside the container 10. As set forth above, a groove 17 is formed in the water drainage unit 15, more particularly in the upper surface thereof connected to the drain outlet 16, which ensures that the separator member 20 seated on the top plane of the water drainage unit 15 does not block the path of the liquid to the drain outlet 16. In the preferred embodiment according to Fig. 3A, the groove 17 is formed in the water drainage unit 15 to extend parallel to the side walls 13. The groove 17 may of course be formed in other directions.

The container 10 according to Fig. 3A comprises four legs 11 arranged near the corners of the base 12 that has a rectangular shape in plan view. However, as can be seen in Fig. 3A, the legs 11 are located at least at a distance from the corners of the base 10, wherein the distance corresponds to the thickness of the side walls 13 of the container 10 at the upper edge of the container 10. This arrangement of the legs 11 has the advantage that the containers 10 can be stacked on each other that a bottom plane of the base 12 of a container 10 is seated against a top pane of the side walls 13 of the container 10 located under it, wherein the legs 11 are preventing the stacked containers 10 from being displaced (e.g., from sliding) horizontally relative to each other. This improves the portability of the containers 10 even when empty, but also in case they are loaded with a planting medium 40. If the containers 20 are not loaded with the planting medium 40 up to the top plane of the side walls 13, then the containers 10 may optionally be stacked on each other even if they contain plants and may be safely shipped to their installation location without damaging the plants in them.

As it has been set forth in relation to Figs. 1 and 2, the preferred embodiment shown in Fig. 3A comprises a respective inside edge 14 on each side wall 13, said edges extending circumferentially along the side walls 13 of the container 10 to provide circumferential support for the separator member 20. The inside edge 14 approximately bisects the thickness of the side wall 13.

Figs. 3B and 3C, respectively, show the sections B-B and A-A of the container 10 according to Fig. 3A. A preferred embodiment of the container 10 is shown in Fig. 5A in a perspective view, wherein Figs. 5B and 5C, respectively, show it in a front view and in a side view. In Figs. 5A-5C the non-visible edges are shown in dashed lines.

As can be well observed in Figs. 3B-3C and Figs. 5B-5C, the upper plane of the water drainage unit 15 lies in line with (coincides with the plane of) the inside edges 14 that are formed on two opposite side walls 13. It can also be seen in these drawings that the upper extremity of the drain outlet 16 is located under the plane defined by the edges 14, and thus the separator member 20 cannot block the drain outlet 16 because, thanks to the groove 17, the separator member 20 does not abut against the upper edge of the opening 16 but only against the upper edge of the water drainage unit 15.

Figs. 3B and 3C also show that the height of the water storage space 18 is approximately the same as the height of the planting medium receiving space 19, this height being approximately identical to the thickness of the base 12. The thickness of the base 12 is therefore approximately one-third of the height of the container 10. Containers 10 made of thermal insulation material therefore have favourable thermal insulation properties, the thickness of the base 12 can ensure that the container 10 has sufficient stability even if a not-too-rigid insulation material, e.g. EPS, is applied.

To provide appropriate thermal insulation, the thickness of the base 12 is at least 50 mm, more preferably at least 100 mm, by way of example 130 mm. The height of the water storage space 18 is preferably at least 10 mm, more preferably at least 25 mm, by way of example 47 mm such that a sufficient amount of liquid can be stored during a longer period (even as long as several weeks) without precipitation. The water storage space 18 has a volume of at least 5 litres; more preferably it makes it possible to store at least 7 litres of liquid. The thickness of the planting medium 40 is determined by the needs of the plants to be planted therein; preferably, the thickness of the planting medium 40 is at least 50 mm, more preferably at least 80 mm. The height of the planting medium receiving space 19 can preferably be determined based on the thickness of the planting medium 40 and the expected height of the plant cover to be included therein. For example, in the case of sedum (stonecrop) planted in an 80 mm-thick planting medium 40, it is preferred to choose the height of the planting medium receiving space 19 to be at least 98 mm.

The height of the side walls 13 is preferably added up from the thickness of the base 12, the depth of the water storage space 18, and the height of the planting medium receiving space 19.

The legs 11 preferably have a height of at least 10 mm, more preferably 20 mm, whereby water drainage from under the containers 10 (i.e., draining water overflow) can be ensured unhindered.

For simple portability and to allow the containers 10 to be carried and installed manually, the container 10 has a width preferably in the range of 300-1000 mm, more preferably in the range of 500-800 mm. The dimensions of the container 10 are preferably chosen in a way that the mass of the container 10 with an empty water storage space 18 and with included planting medium 40 does not exceed 25 kg, more preferably 15 kg.

Fig. 4 shows in a sectional view a preferred embodiment of an assembled plant holder arrangement. The features of the particular structural components shown in Fig. 4 are basically identical to what has been described above in relation to Figs. 1-2, and to the preferred features described in relation to the container 10 with reference to Figs. 3B and 3C.

Fig. 4 shows a particularly preferable implementation of the water-wicking fabric 30 arrangement, according to which the water-wicking fabric 30 is seated in its entirety on the surface of the separator member 20, and is folded under the separator member 20 at the inside edges 14 (i.e., at least at two opposite side walls 13), at which locations the water-wicking fabric 30 preferably fits tightly against the inside edge 14, wherein the ends of the water-wicking fabric 30 (i.e., the "overhanging portions" described in relation to Figs. 1-2) extending down to the full depth of the water storage space 18, are laid on the base 12 at the bottom of the water storage space 18. This arrangement of the water-wicking fabric 30 preferably provides that, thanks to the filtering performed by the water-wicking fabric 30, particles of the planting medium (typically, soil particles) cannot enter the water storage space 18 through the water pass-through openings 24 of the separator member 20, so they do not reduce the size and receiving capacity of the water storage space 18 and do not block the drain outlet 16 functioning as an overflow outlet, so the plant holder arrangement according to the invention does not require maintenance. The water-wicking fabric 30 extending down to the bottom of the water storage space 18 (i.e., the base 12) provides that the water-wicking fabric 30 can almost entirely absorb the liquid in the water storage space 18 and can convey it to the planting medium 40 in the case of any fill level of the water storage space 18.

In case the container 10 has a circumferential inside edge 14 extending circumferentially along all side walls 13 as shown in Figs. 1-2, cuts can be made in the water-wicking fabric 30 to facilitate the folding of the water-wicking fabric 30 under the separator member 20 along its circumference along each of the inside edges 14, thereby providing that the water-wicking fabric 30 remains wrinkle-free.

Preferably, the bottom surface of the water storage space 18 is slightly inclined (for example, at most at 5°) towards the side walls 13, so at low fill levels of the water storage space 18 the liquid flows into and accumulates in the region where the water-wicking fabric 30 is located, thereby also facilitating that the liquid is used to the greatest possible extent for re-moistening the planting medium 40.

Fig. 6 shows, in a top plan view, a preferred embodiment of the separator member 20. The separator member 20 is adapted for separating the water storage space 18 from the planting medium receiving space 19, but in order to allow the liquid, for example rainwater held by the planting medium 40 to flow from the planting medium receiving space 19 into the water storage space 18, the separator member 20 is provided with water pass-through openings 24. The water pass-through openings 24 are preferably spaced nearly uniformly along the surface of the separator member 20. To improve the stability of the separator member 20, the separator member 20 preferably comprises a first stiffener 21 that is located between two opposite corners of the separator member 20. More preferably, the separator member 20 comprises two first stiffeners 21 that are located between opposite corners of the separator member 20 forming an X shape. To further improve its stability, the separator member 20 comprises two second stiffeners 22 in a longitudinal direction and a third stiffener 23 in a transverse direction; more preferably, it comprises a plurality of longitudinal second stiffeners 22 and transversal third stiffeners 23, wherein the water pass-through openings 24 are formed by spatial regions between the stiffeners.

The separator member 20 preferably comprises a frame 25 along its circumference. The frame 25 is adapted to provide additional reinforcement to the separator member 20, such that the separator member 20 can withstand pressure generated on the separator member 20 by the planting medium 40 and vegetation planted therein to the greatest possible extent, with as little deformation as possible. Preferably, no pass-through openings 24 are formed in the frame 25, because the separator member 20 abuts against the inside edge 14 along the frame. Accordingly, the width of the frame 25 is preferably identical to the width of the inside edge 14.

As depicted in Fig. 6, in the region where the first stiffeners 21 cross each other, the separator member 20 is configured not to comprise pass-through openings 24 in a cover region 26. In the case depicted in Fig. 6, the cover region 26 has a near-circular shape. The cover region is preferably located at a position corresponding to the position of the water drainage unit 15, preventing liquid from directly flowing from the planting medium 40 into the drain outlet 16 of the water drainage unit 15, and ensuring that, should the water-wicking fabric 30 become damaged, particles of the planting medium 40 cannot directly block the drain outlet 16.

The separator member 20 is preferably made of acrylonitrile butadiene styrene (ABS).

The mode of industrial application of the invention follows from the features of the technical solution according to the disclosure above. As can be seen from the description above, the invention achieves its objective in an extremely advantageous manner compared to the prior art. The invention is, of course, not limited to the preferred embodiments described in detail above, but further variants, modifications and developments are possible within the scope of protection determined by the claims.

### List of reference signs

- 10: container
- 11: leg
- 12: base
- 13: side wall
- 14: edge
- 15: water drainage unit
- 16: drain outlet
- 17: groove
- 18: water storage space
- 19: planting medium receiving space
- 20: separator member
- 21: first stiffener
- 22: second stiffener
- 23: third stiffener
- 24: water pass-through opening
- 25: frame
- 26: cover region
- 30: water-wicking fabric
- 40: planting medium

## Claims

1. A plant holder arrangement, particularly for creating a green roof, the arrangement comprising
- a container (10) having a base (12) and side walls (13) protruding from the base (12),
- a water storage space (18) adapted for storing water and a planting medium receiving space (19) adapted for receiving a planting medium (40), arranged in the container (10), and
- a water-wicking fabric (30) providing water transmission between the water storage space (18) and the planting medium receiving space (19),
**characterised in that**
- the container (10) further comprises at least two inside edges (14) formed in opposite side walls (13),
- the arrangement further comprises a separator member (20) arranged to abut on the inside edge (14) to separate the water storage space (18) from the planting medium receiving space (19), said separator member (20) having water pass-through openings (24), and
- the water-wicking fabric (30) is arranged such that it is seated on the separator member (20) in the planting medium receiving space (19), and it is folded under the separator member (20) along the inside edge (14).

2. The arrangement according to claim 1, **characterised in that** the container (10) further comprises a water drainage unit (15) protruding from the base (12) and having a drain outlet (16) formed therein.

3. The arrangement according to claim 2, **characterised in that** an upper plane of the water drainage unit (15) is in line with the inside edge (14).

4. The arrangement according to any of claims 1-3, **characterised in that** the water-wicking fabric (30) is arranged such that at least a portion of the water-wicking fabric (30) is laid on the base (12) in the water storage space (18).

5. The arrangement according to any of claims 1-4, **characterised in that** the base (12) and/or the side wall (13) of the container (10) is made from an insulation material.

6. The arrangement according to claim 5, **characterised in that** the insulation material is extruded polystyrene (EPS).

7. The arrangement according to any of claims 1-6, **characterised in that** each side wall (13) of the container (10) comprises an inside edge (14), said edges collectively forming a circumferential edge extending circumferentially along the bottom portion of the planting medium receiving space (19).

8. The arrangement according to any of claims 1-7, **characterised in that** a groove (17) is formed in the top plane of the water drainage unit (15), wherein the groove (17) is in connection with the drain outlet (16) .

9. The arrangement according to any of claims 1-8, **characterised in that** the container (10) comprises a leg (11) defining a water drainage space under the base (12) of the container (10).

10. The arrangement according to claim 9, **characterised in that** a water drainage channel is arranged in the water drainage space, wherein water drainage channel is in connection with the drain outlet (16) of the container (10).
